# EUROPÄISCHE PATENTSCHRIFT

(11) **EP 0 394 179 B1**
(45) Veröffentlichungstag und Bekanntmachung des Hinweises auf die Patenterteilung: **15.12.1993**
(21) Anmeldenummer: 90630080.1
(22) Anmeldetag: 05.04.1990
(51) Int. Cl.: E21D 21/00, F16B 13/06

(54) **Kombinierter starrer Profil- und Dehnanker mit Spreizelement**
Combined rigid profile and extension anchor with expansion element
Boulon d'ancrage rigide profilé et extensible avec élément d'expansion

(30) Priorität: 15.04.1989 DE 3912499
(43) Veröffentlichungstag der Anmeldung: 24.10.1990
(73) Patentinhaber: Bergwerksverband GmbH, D-45307 Essen (DE)
(72) Erfinder: Stephan, Peter, D-4300 Essen 13 (DE)
(74) Vertreter: Weydert, Robert

(56) Entgegenhaltungen:
- DE-A- 3 210 262
- GB-A- 1 068 357
- GB-A- 2 138 528
- US-A- 1 394 925
- US-A- 2 804 797
- US-A- 4 819 869

## Beschreibung

Die Erfindung betrifft einen Gebirgsanker zur Sicherung von Strecken und Räumen im Berg- und Tunnelbau in Form eines insbesondere nach dem Füllmörtelverfahren zu setzenden, kombinierten starren Profil- und Dehnankers, dessen Ankerstange mit Ausnahme der Ankerspitze von einem Hüllrohr umgeben und deren aus dem Bohrlochmund herausragendes Ende mittels einer Ankerplatte und einer Verschraubung gegenüber dem Gebirge verspannbar ist.

In der DE-A-34 17 252 ist ein Gebirgsanker nach dem Oberbegriff des Anspruches 1 beschrieben, dessen Ankerstange mit Ausnahme seiner als Formelement ausgebildeten Mischspitze über seine gesamte Länge von einem aus zwei Abschnitten bestehenden Hüllrohr umgeben ist, dessen im Bohrlochtiefsten angeordneter Abschnitt mit der Ankerstange und dem anderen Hüllrohrabschnitt jeweils kraftschlüssig verbunden ist. Ein derartiger Gebirgsanker, auch als kombinierter starrer Profil- und Dehnanker bezeichnet, der im Bohrloch eingeklebt wird, wirkt zunächst nach Aushärten des Klebers als starrer Anker mit hoher Zugfestigkeit und übernimmt erst nach Überschreiten einer vorbestimmbaren Tragkraft die Funktion eines Dehnankers. Die Übernahme der sofortigen Tragkraft ist jedoch in vollem Umfang abhängig von einem schnell aushärtenden Kleber. Ein anderer Gebirgsanker zeigt die GB-A-2 138 528. Mehrere Hülsen mit schrägen Endflächen sind um die Ankerstange angeordnet. Durch Verspannen der Hülsen gegeneinander werden sie radial nach aussen gedrückt zur Anlage an die Bohrlochwandung.

Der Einsatz des Kombi-Ankers und seine sofortige Wirkung kann bisher beispielsweise in Verbindung mit dem eine längere Abbindezeit benötigenden Füllmörtelverfahren nicht durchgeführt werden. Auch ist es nicht möglich, den Kombi-Anker ohne Verklebung bzw. Vermörtelung, beispielsweise mit Spreizhülsensystem einzusetzen. Die Spreizhülsen, die nach dem Einführen des Ankers in das Bohrloch durch einen Konus oder ein Keilelement an die Bohrlochwandung gepresst werden, erfordern für die Funktionsfähigkeit des Systems relativ präzise Bohrlochdurchmesser. Ein weiterer Nachteil der Spreizhülsensysteme liegt darin, dass die meisten Spreizelemente aus Grauguss hergestellt sind und bei zu hohen Spannkräften zum Versagen durch Bruch neigen.

Zum Stand der Technik wird auch noch auf die GB-A-1,068,357 hingewiesen, die ein in weiches Erdreich einzutreibender Pflock für Zelte, Netze, Seile oder dergleichen betrifft. Eine Hülse mit längsverlaufenden Schlitzen ist um eine mittlere Stange angeordnet. Nach dem Eindrücken des Pflockes in das Erdreich wird die Hülse weiter nach unten gedrückt, damit sie sich im Bereich der Schlitze aufweiten kann. Dabei dringen die zwischen den Schlitzen gebildeten Streifen der Hülse seitlich in das Erdreich ein zur besseren Verankerung des Pflockes. In der US-A-4,819,869 und der DE-A-32 10 262 sind Dübel beschrieben, die in ihren Wandungen kreisförmige Ausnehmungen aufweisen, welche in Schlitze übergehen.

Der Erfindung liegt die Aufgabe zugrunde, einen Gebirgsanker zu schaffen, der die Anwendung eines sofort tragenden Kombi-Ankers mit den entsprechenden Vorteilen, insbesondere nach dem Füllmörtelverfahren erlaubt.

Diese Aufgabe wird erfindungsgemäss dadurch gelöst, dass mindestens ein Abschnitt des Hüllrohres mit über den Umfang und über die Länge verteilten in Schlitze eingebundenen Ausnehmungen versehen als Spreizelement und die Ankerspitze als Widerlager ausgebildet sind, und dass die oberhalb und unterhalb in die Schlitze übergehenden Ausnehmungen drei- oder vieleckige geometrische Formen mit mindestens zwei mit der Stauchrichtung einen spitzen Winkel bildenden Seiten aufweisen.

Die Formgebung sowie die Funktion des Spreizelementes ermöglichen sowohl das problemlose Einbringen des Ankers in ein mörtelgefülltes Bohrloch als auch die Aufnahme der sofortigen Tragkraft nach dem Setzen. Der Spreizvorgang erfolgt mit Hilfe eines Schraubers, der über die Spannmutter am Bohrlochmund die Ankerstange aus dem Hüllrohr zieht und dadurch die Spreizhülse verformt oder mittels eines Hohlzylinders. Der sich anpassende Durchmesser des Ankers, d.h. des aufspreizenden Hüllrohrs, lassen das Einsetzen und wirkungsvolle Verspannen auch ohne Füllmörtelverfahren in Bohrlöchern zu, die zum Beispiel bedingt durch gebräche Schichten keinen präzisen Bohrlochmesser aufweisen.

Die oberhalb und unterhalb in Längsrichtung der Ankerachse verlaufenden in Schlitze eingebundenen Ausnehmungen weisen ebenso wie die Schlitze scharfe Kanten auf, so dass bei Verformung des Hüllrohres bzw. des oder eines Hüllrohrabschnittes die entstehenden Aufbiegungen wie scharfe Krallen in die Bohrlochwandung eindringen und ein Spreizelement bilden. Um die Aufbiegung der Ausnehmungen beim Stauchvorgang in Richtung und Wirkung zu beschleunigen, sieht die Erfindung vor, dass die oberhalb und unterhalb in Schlitze übergehenden Ausnehmungen drei- oder vieleckige geometrische Formen mit mindestens zwei mit der Stauchrichtung einen spitzen Winkel bildenden Seiten aufweisen.

Das erfindungsgemässe Spreizelement ist gegen Abweichungen des Bohrlochdurchmessers unempfindlich. Je nach Erfordernis der aufzubringenden Tragkraft erweist es sich als vorteilhaft, das Hüllrohr über die gesamte Länge oder abschnittsweise als Spreizelement auszubilden. Es wird sich als zweckmässig erweisen, nur den der Ankerspitze nachfolgenden Abschnitt des Hüllrohres als Spreizelement auszubilden.

Der als Spreizelement vorgesehene Abschnitt des Hüllrohres kann als ein selbständiger Abschnitt oder aber auch aus einer Vielzahl von Einzelelementen zusammengesetzt auf die Ankerstange aufgesetzt werden. Die Zahl der Ausnehmungen ist auf den Durchmesser und das Material der Hüllrohre abzustellen, wobei ein weicheres Material weniger Schlitze erfordert.

Mehrere Ausführungsbeispiele der Erfindung sind in den Zeichnungen dargestellt und werden im nachfolgenden näher erläutert:

Es zeigen:
Figur 1 - eine teilweise Darstellung eines Ausführungsbeispiels eines Kombi-Ankers mit einem als Spreizelement ausgebildeten Hüllrohrabschnitt in ungestauchtem Zustand
Figur 2 - das in Figur 1 dargestellte Ausführungsbeispiel mit gestauchtem Spreizelement
Figur 3 - ein weiteres Ausführungsbeispiel eines Kombi-Ankers mit einem aus Einzelelementen zusammengesetzten Spreizelementen in ungestauchtem Zustand
Figur 4 - das in Figur 3 dargestellte Ausführungsbeispiel in gestauchtem Zustand
Figur 5 - ein Einzelelement für ein ein Spreizelement bildenden Hüllrohrabschnitt in ungestauchtem Zustand
Figur 6 - ein Schnitt durch das in Figur 5 dargestellte Einzelelement und
Figur 7 - ein Einzelelement, wie in Figur 5 dargestellt in gestauchtem Zustand

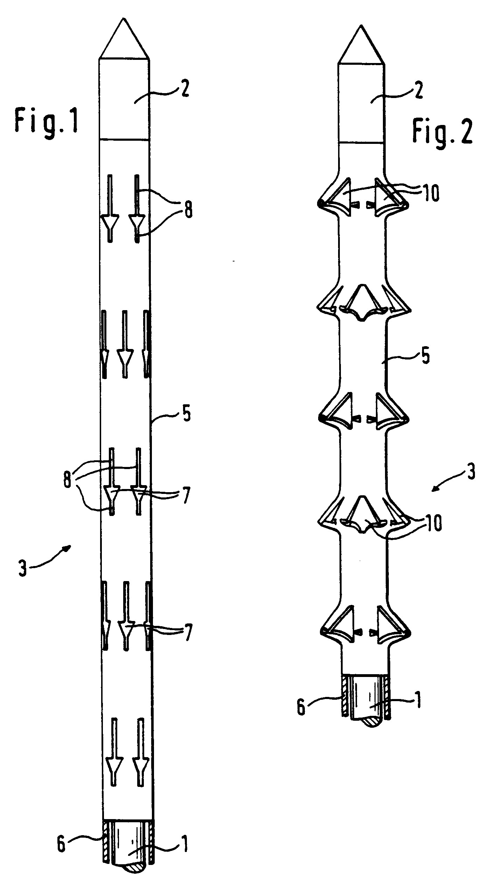

Das in Figur 1 in ungestauchtem Zustand und teilweise wiedergegebene Ausführungsbeispiel eines Kombi-Ankers besteht im wesentlichen aus einer Ankerstange 1 aus dehnbarem Stahl, die zum Bohrlochtiefsten mit einer als Widerlager ausgebildeten Ankerspitze 2 versehen und mit Ausnahme der Ankerspitze 2 über die gesamte Länge von einem aus zwei Abschnitten 5 und 6 bestehenden Hüllrohr 3 umgeben ist. Der Abschnitt 5 ist über den Umfang und in der Länge mit verteilt angeordneten in Schlitze 8 eingebundenen Ausnehmungen 7 versehen. In Längsrichtung des Abschnittes 5 sind die Ausnehmungen 7 jeweils versetzt zueinander eingebracht. Die Schlitze 8 und die Ausnehmungen 7 sind jeweils scharfkantig ausgebildet, so dass die in gestauchtem Zustand aufgebogenen Schlitze 8 und Ausnehmungen 7, wie aus Figur 2 hervorgeht, scharfkantige Krallen 10 bilden.

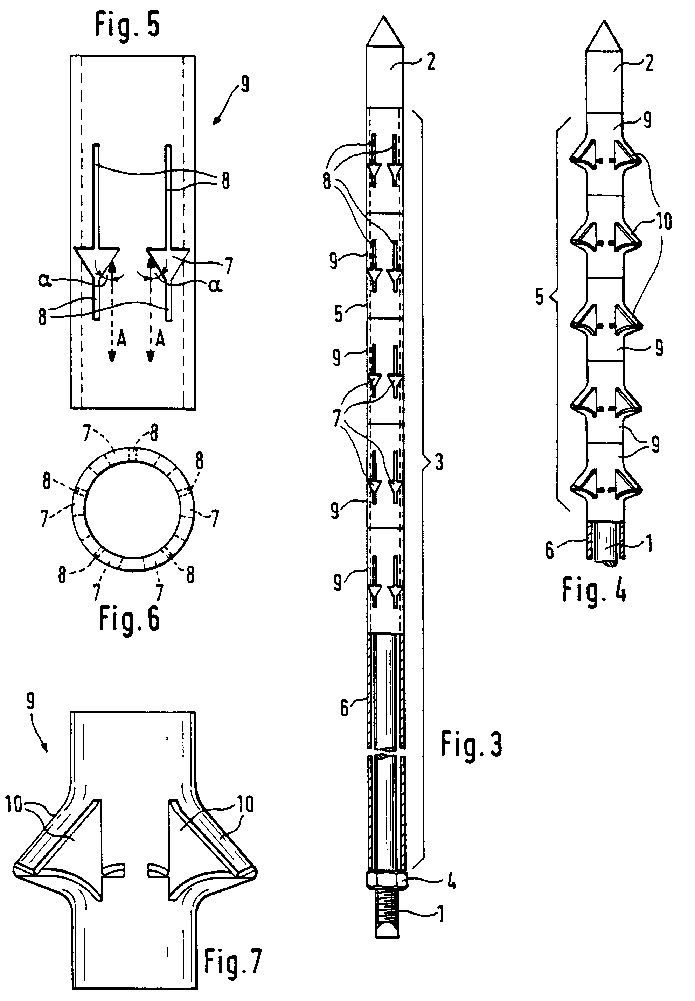

Die Abweichungen des in den Figuren 3 und 4 dargestellten ungestauchten und gestauchten Ausführungsbeispiels eines Kombi-Ankers besteht im Gegensatz zu dem in Figur 1 und 2 dargestellten Ausführungsbeispiel darin, dass der Hüllrohrabschnitt 5 des Hüllrohres 3 aus Einzelelementen 9 zusammengesetzt ist. Ein Einzelelement 9 ist in Figur 5 detailliert wiedergegeben. Die oberhalb und unterhalb in Schlitze 8 übergehenden Ausnehmungen 7 weisen dreieck- oder vieleckige geometrische Formen mit mindestens zwei mit der durch die gestrichelten Doppelpfeile A angedeuteten Stauchrichtung einen spitzen Winkel α bildenden Seiten auf. Aus dem Schnitt nach Figur 6 geht hervor, dass zum Beispiel über den Umfang in gleichmässigem Abstand verteilt fünf Ausnehmungen 7 vorgesehen sind. Das Einzelelement 9 ist in Figur 7 nochmals in gestauchtem Zustand dargestellt.

## Patentansprüche

1. Gebirgsanker zur Sicherung von Strecken und Räumen im Berg- und Tunnelbau in Form eines insbesondere nach dem Füllmörtelverfahren zu setzenden, kombinierten starren Profil- und Dehnakers, dessen Ankerstange (1) mit Ausnahme der Ankerspitze (2) von einem Hüllrohr (3) umgeben und deren aus dem Bohrlochmund herausragendes Ende mittels einer Ankerplatte und einer Verschraubung gegenüber dem Gebirge verspannbar ist, dadurch gekennzeichnet, daß mindestens ein Abschnitt (5) des Hüllrohres (3) mit über den Umfang und über die Länge verteilten in Schlitze (8) eingebundenen Ausnehmungen (7) versehen als Spreizelement und die Ankerspitze (2) als Widerlager ausgebildet sind, und daß die oberhalb und unterhalb in die Schlitze (8) übergehenden Ausnehmungen (7) drei- oder vieleckige geometrische Formen mit mindestens zwei mit der Stauchrichtung (A) einen spitzen Winkel (α) bildenden Seiten aufweisen.

2. Gebirgsanker nach Anspruch 1, dadurch gekennzeichnet, daß das Hüllrohr (3) über die gesamte Länge als Spreizelement ausgebildet ist.

3. Gebirgsanker nach Anspruch 1, dadurch gekennzeichnet, daß das Hüllrohr (3) aus mindestens zwei Abschnitten (5, 6) besteht, wobei der zum Bohrlochtiefsten gerichtete Abschnitt (5) als Spreizelement ausgebildet ist.

4. Gebirgsanker nach Anspruch 4, dadurch gekennzeichnet, daß der zum Bohrlochtiefsten gerichtete und als Spreizelement ausgebildete Abschnitt (5) des Hüllrohres (3) aus einer Vielzahl von Einzelelementen (9) besteht.

5. Gebirgsanker nach Anspruch 5, dadurch gekennzeichnet, daß die Einzelelemente (9) des ein gemeinsames Spreizelement bildenden Abschnitts (5) jeweils mit mindestens einer über den Umfang verteilten Reihe von Ausnehmungen (7) versehen sind.

6. Gebirgsanker nach Anspruch 1, dadurch gekennzeichnet, daß die Ausnehmungen (7) und die Schlitze (8) mit scharfen Kanten versehen sind.

7. Gebirgsanker nach Anspruch 1, dadurch gekennzeichnet, daß die über den Umfang des Spreizelementes in gleichmässigem Abstand eingebrachten Ausnehmungen (7) gegenüber den Ausnehmungen (7) ober- und unterhalb jeweils versetzt angeordnet sind.

## Claims

1. A rock anchor for securing lengths and spaces in mining and tunnel constructions in the form of a combined rigid profile and expansion anchor, which is set in particular by mortar filling and the anchor bar (1) of which is encased, with the exception of the anchor tip (2), by a sleeve tube (3), and its end which protrudes from the borehole mouth is clamped to the rocks by means of an anchor plate and by bolting, **characterised in that** at least one section (5) of the sleeve tube (3) is provided with peripherally and longitudinally spaced cut-outs (7) which are bound into slots (8) and arranged as an expanding element, and that the anchor tip (2) is arranged as an abutment, and that the cut-outs (7) which merge at the top and bottom into the slots (8) have triangular or polygonal geometric forms with at least two sides at an acute angle (α) to the compression direction (A).

2. A rock anchor according to claim 1, **character- ised in that** the sleeve tube (3) is over its entire length arranged as an expanding element.

3. A rock anchor according to claim 1, **character-** **ised in that** the sleeve tube (3) is composed of at least two sections (5, 6), and that the section (5) oriented towards the borehole bottom is arranged as an expanding element.

4. A rock anchor according to claim 4, **character-** **ised in that** section (5) of the sleeve tube (3), which is oriented towards the borehole bottom and arranged as an expanding element, is composed of a plurality of individual elements (9).

5. A rock anchor according to claim 5, **character-** **ised in that** the individual elements (9) of the section (5) which forms a common expanding element, is provided with at least one peripherally spaced line of cut-outs (7).

6. A rock anchor according to claim 1, **character-** **ised in that** the cut-outs (7) and the slots (8) are provided with sharp edges

7. A rock anchor according to claim 1, **character-** **ised in that** cut-outs (7), which are peripherally and evenly spaced over the expanding element, are at the top and bottom offset relative to the cut-outs (7).

## Revendications

1. Ancrage de terrains, pour la sécurité de galeries et de chambres dans l'exploitation des mines et dans la construction de tunnels, sous la forme d'un ancrage combiné, rigide à profilages et extensible, à poser en particulier par le procédé de remplissage au mortier, dont la tige d'ancrage (1), à l'exception de la pointe (2) de l'ancrage, est entourée par un tube formant enveloppe (3) et dont l'extrémité dépassant de l'orifice du trou de forage peut être mise en serrage contre les terrains au moyen d'une plaque d'ancrage et d'un filetage, caractérisé en ce qu'au moins une partie (5) du tube enveloppe (3) est munie d'évidements (7) intercalés dans des fentes (8), disposés répartis sur sa périphérie et sur sa longueur, comme organe d'expansion, en ce que les pointes d'ancrage (2) sont réalisées pour former des butées, et en ce que les évidements (7), se continuant vers le haut et vers le bas par des fentes (8), présentent des formes géométriques triangulaires ou polygonales comportant au moins deux côtés formant un angle aigu (α) avec la direction (A) de compression.

2. Ancrage de terrains suivant la revendication 1, caractérisé en ce que le tube enveloppe (3) est réalisé, sur toute sa longueur, sous la forme d'un organe d'expansion.

3. Ancrage de terrains suivant la revendication 1, caractérisé en ce que le tube enveloppe (3) est constitué d'au moins deux parties (5, 6), la partie (5), dirigée vers le fond du trou, étant réalisée sous la forme d'un organe d'expansion.

4. Ancrage de terrains suivant la revendication 3, caractérisé en ce que la partie (5) du tube enveloppe (3), dirigée vers le fond du trou et réalisée sous forme d'organe d'expansion, est constituée d'un nombre important d'éléments séparés (9).

5. Ancrage de terrains suivant la revendication 4, caractérisé en ce que chacun des éléments séparés (9) de la partie (5) formant un organe d'expansion commun est muni d'au moins une rangée d'évidements (7), répartie sur la périphérie.

6. Ancrage de terrains suivant la revendication 1, caractérisé en ce que les évidements (7) et les fentes (8) sont munies d'arêtes vives.

7. Ancrage de terrains suivant la revendication 1, caractérisé en ce que les évidements (7), disposés à distance régulière sur la périphérie de l'organe d'expansion, sont disposés décalés chacun par rapport aux évidements (7) placés au-dessus et au-dessous.
